# EUROPEAN PATENT APPLICATION

(11) **EP 2 157 575 A1**
(43) Date of publication of application: **24.02.2010**
(21) Application number: 08305494.0
(22) Date of filing: 21.08.2008
(51) Int. Cl.: G11B 7/135, G11B 7/24

(54) **Method and apparatus for reading data from an optical storage medium, and respective optical storage medium**

(71) Applicant: Thomson Licensing, 92443 Issy-les-Moulineaux Cedex (FR)
(72) Inventor: Knittel, Joachim, 78532, Tuttlingen (DE)
(74) Representative: Arnold, Klaus-Peter

(57) **Abstract**

A method and an apparatus for reading data from a storage medium comprising an annular intensity zone having a centrally located diffraction-limited readout zone onto a surface of the storage medium and directing an incident readout beam onto the centrally located diffraction-limited readout zone, the method comprises reading data at a sub-diffraction limited resolution from the storage medium via reflections caused by the readout beam.

## Description

### FIELD OF THE INVENTION

The present invention relates to the field of data storage systems. In particular, exemplary embodiments of the present invention relate to an apparatus and method for increasing the resolution at which data can be read from an optical storage medium.

### BACKGROUND

Optical storage media are media in which data are stored in an optically readable manner, for example by means of a pickup comprising a laser for illuminating the optical storage medium and a photo-detector for detecting the reflected light of the laser beam when reading the data. In the meanwhile a large variety of optical storage media are available, which are operated with different laser wavelength, and which have different sizes for providing storage capacities from below one Gigabyte up to 50 Gigabyte (GB). The formats include read-only formats (ROM) such as Audio CD and Video DVD, write-once optical media as well as rewritable formats. Digital data are stored on these media along tracks in one or more layers of the media. The storage medium with the highest data capacity is at present the Blu-Ray disc (BD), which allows to store 50 GB on a dual layer disc.

New optical storage media with a super-resolution near-field structure (Super-RENS) offer the possibility to increase the data density of the optical storage medium by a factor of three to four in one dimension in comparison with the Blu-Ray disc. This is possible by using a so-called Super-RENS structure or layer, which is placed above the data layer of the optical storage medium, and which significantly reduces the effective size of a light spot used for reading from or writing to the optical storage medium. The super-resolution layer is also called a mask layer because it is arranged above the data layer and by using specific materials only the high intensity center part of a laser beam can penetrate the mask layer. Also other mechanisms for super-resolution are known, e.g. by using a mask layer which shows an increased reflectivity at higher laser power.

The Super-RENS effect allows to record and read data stored in marks of an optical disc, which have a size below the resolution limit of a laser beam used for reading or writing the data on the disc. As known, the diffraction limit is about lambda/(2*NA) according to Abbe, where lambda is the wavelength and NA the numerical aperture of the objective lens of the optical pickup.

Westphal, V., Hell, S, "Nanoscale Resolution in the Focal Plane of an Optical Microscope", Department of NanoBiophotonics, Max Planck Institute for Biophysical Chemistry, PRL 94, 143903, 37070 Goettingen, Germany, 15 April 2005 purports to disclose utilizing single fluorescent molecules as probes. The paper claims to prove the ability of a far-field microscope to attain spatial resolution down to 16 nm in the focal plane, corresponding to about 1/50 of the employed wavelength. The optical bandwidth expansion by nearly an order of magnitude is said to be realized by a saturated depletion through stimulated emission of the molecular fluorescent state. The paper claims to demonstrate that, en route to the molecular scale, the resolving power increases with the square root of the saturation level, which constitutes a new law regarding the resolution of an emerging class of far-field light microscopes that are not limited by diffraction. A method is described which uses a modified stimulated emission depletion (STED) wave front caused by a doughnut shaped or double humped shaped intensity zone for squeezing the light spot of a readout beam.

U.S. Patent No. 6,115,345 to Kato, et al. purports to disclose a system in which a linearly polarized light is beam emitted from a coherent light source. The light beam reaches a polarizing phase plate and is thereby divided into a primary beam and a subsidiary beam having a polarized light component perpendicular to the polarized light component of the primary beam and a double-humped pattern, in which the center position coincides with the center position of the primary beam and the principal portion is equal in size to the principal portion of the primary beam. The primary beam and the subsidiary beam are focused onto an information storage surface of an optical disk and reflected therefrom, so that they are separated again through polarization separation and individually detected by first to third optical detectors. The output signals from the first to third optical detectors are calculated by a differential calculator and outputted therefrom. Difractive optical elements (DOE) are used to provide intensity zones having the shape of the double humped pattern, or other patterns. Similar optical systems are also known from US 5625613, JP 07-320295 and JP 07-234382.

An improved method and system for reading data from a storage medium at very high resolutions, such as, for example, nanoscale resolutions, is desirable.

### BRIEF SUMMARY OF THE INVENTION

A method of reading data from a storage medium according to the invention, the storage medium having a surface, is set forth in claim 1.

The method comprises the steps of directing at least one annular intensity zone having a centrally located diffraction-limited readout zone onto the surface of the storage medium and directing a readout beam onto the centrally located diffraction-limited readout zone. The method according to the invention additionally comprises reading data at a sub-diffraction limited resolution from the surface of the storage medium via reflections caused by the readout beam.

In preferred embodiments, a doughnut shaped intensity zone may be used for squeezing the effective light spot of the readout beam in two directions, or two intensity zones may be used shaped in a double humped pattern for squeezing the effective light spot of the readout beam in one direction. By adjusting a specific intensity value for the one or two intensity zones, the effective size of the light spot of the readout beam can selected.

An apparatus for reading data from a storage medium according to the invention, the storage medium having a surface, is set forth in claim 8. The apparatus comprises an element that is adapted to direct an annular intensity zone having a centrally located diffraction-limited readout zone onto the surface of the storage medium. The system further comprises a detector that is adapted to receive a readout beam being reflected from the centrally located diffraction-limited readout zone and to read data at a sub-diffraction limited resolution from the surface of the storage medium via reflections caused by the readout beam.

According to the invention, the storage medium may comprise a Super-Resolution Near-Field Structure structure. A refractive index of the storage medium may be changed within the annular intensity zone relative to an area of the storage medium outside the annular intensity zone. Alternatively, a reflectivity of the storage medium may be changed within the annular intensity zone relative to an area of the storage medium outside the annular intensity zone.

Focus control may be performed using light reflected from the centrally located diffraction-limited readout zone. According to the invention, a light intensity within the annular intensity zone is in the range of about 1 mW to 3 mW. In addition, a light intensity within the centrally located diffraction-limited readout zone is in the range of about 0,1 mW to 0,5 mW.

### BRIEF DESCRIPTION OF THE DRAWINGS

Fig. 1 is a diagram that is useful in explaining a method and apparatus that employs two light beams to read high resolution data from an optical disk in accordance with a first exemplary embodiment of the present invention.
Fig. 2 is a diagram of an optical disk that is useful in explaining an apparatus and method according to the first exemplary embodiment of the present invention.
Fig. 3a is a diagram being useful in explaining a method and apparatus that employs two light beams to read high resolution data from an optical disk in accordance with a second exemplary embodiment of the present invention.
Fig. 3b is a diagram of an optical disk that is useful in explaining an apparatus and method according to the second exemplary embodiment of the present invention.
Fig. 4 is a block diagram showing a pickup that is adapted to read data from a storage medium in accordance with the second exemplary embodiment of the present invention.
Fig. 5 is a diagram of a diffractive optical element in accordance with the second exemplary embodiment of the present invention, and
Fig. 6 is a process flow diagram showing a method of reading data from a storage medium in accordance with an exemplary embodiment of the present invention.

### DETAILED DESCRIPTION OF PREFERRED EMBODIMENTS

In accordance with exemplary embodiments of the present invention, a donut-shaped, ring-shaped or annular beam or beams are used in conjunction with a relatively low intensity readout beam to read optical data at very high resolutions, including nanoscale resolutions. Exemplary embodiments of the present invention combine this approach with using a readout of a Super-Resolution Near-Field Structure disc, which may be referred to herein as a Super-RENS disc, to further increase the resolution at which information may be read from an optical storage medium. Moreover, exemplary embodiments of the present invention may facilitate optical storage media with increased storage capacity.

In one exemplary embodiment of the present invention, a single beam is split into two beams. One of the beams comprises a readout beam with relatively low intensity, about 100-500 µW, e.g. 300 µW, for example. This beam may be focused into a diffraction-limited spot on the disc. The reflected part of this beam may be used for tracking, focus control and data signal generation using a single detector. The second beam irradiates the disc medium with an annular intensity zone. The intensity of the second beam is sufficiently high, about 1 to 3 mW, for example, so that a ring-shaped aperture in a Super-RENS material layer of an optical storage medium is generated. The effective focus diameter of the first beam is reduced by this aperture and a sub-diffraction limited resolution may be achieved.

An exemplary embodiment of the present invention may be adapted for use with Super-RENS materials having a reduced reflectivity, when illuminated. This behavior is shown by ZnO thin films, which are used, for example, by Sharp for Super-RENS ROM discs.

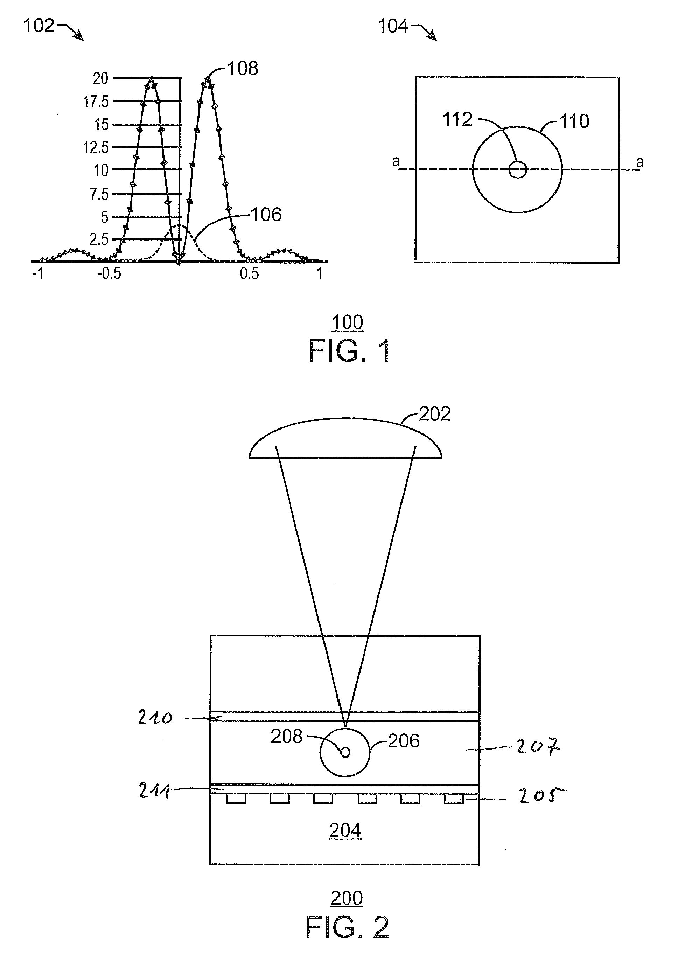

Fig. 1 is a diagram that is useful in explaining a method and apparatus that employs two light beams to read high resolution data from an optical disk in accordance with an exemplary embodiment of the present invention. The diagram is generally referred to by the reference number 100. The diagram 100 includes a left view 102 and a right view 104. The left view 102, which generally represents an intensity distribution of two light beams taken at a cross section through a line a-a shown in the right view 104, is a graph showing a first trace 106 and a second trace 108. The first trace 106 represents a relative focus intensity of a first light beam and the second trace 108 represents a relative focus intensity of a second light beam. As used herein, the terms "first beam" or "readout beam" refer to a light beam represented by the first trace 106. Light from the first beam that is reflected from the storage medium may be used for tracking and focus control, as well as to determine data written on the storage medium. The terms "second beam" or "high power beam" refer to a light beam represented by the second trace 108. The second beam is used to form an annular intensity zone having a centrally located diffraction-limited readout zone on a surface of a storage medium.

The skilled person will appreciate that a y-axis of the left view 102 represents a relative intensity in arbitrary units. An x-axis of the left view 102 represents a position in direction parallel to tracks of an optical storage medium in µm. As shown in Fig. 1, the first light beam is relatively low intensity relative to the second light beam in an exemplary embodiment of the present invention. Use of the first light beam and the second light beam to read very high resolution data, such as, for example, nanoscale resolution data, from an optical storage medium is described in detail below.

The right view 104 of the diagram 100 represents an intensity distribution in the focal plane of the second beam, which corresponds to the second trace 108. The right view 104 includes an annular intensity zone 110. The annular shape of the intensity pattern of the second beam allows precise focusing of the readout beam along two axes. Moreover, a centrally located diffraction-limited readout zone 112 is present at the center of the annular intensity zone 110. The size of the centrally located diffraction-limited readout zone 112 in which the readout beam may be controlled by increasing or decreasing the power used to create the second beam.

As shown in the left view 102, the intensity distribution of the second beam, represented by the second trace 108, has two side peaks that will modify a Super-RENS layer in a Super-RENS disc during readout. The modification of the Super RENS layer is schematically shown in Fig. 2. The skilled person will appreciate that the left view 102 is a cross-sectional view of the annular intensity region 110 shown in the right view 104.

Fig. 2 is a diagram of an optical disc that is useful in explaining the embodiment of Fig. 1. The diagram is generally referred to by the reference number 200. In the diagram 200, the two beams produced in an exemplary embodiment of the present invention are focused by an objective lens 202. The objective lens 202 directs the two light beams onto an optical disc substrate 204 that contains a ROM mark/space structure, e.g. pits and spaces. In an exemplary embodiment of the present invention, the coated optical optical disc substrate 204 comprises a data layer or data structure 205 and may include a reflective layer, not shown. The optical disc comprises further a layer with a Super-Resolution Near-Field Structure 207 as a part of a Super-RENS optical disc.

The high intensity beam represented by the second trace 108 in Fig. 1 creates an annular intensity zone 206 on the coated optical disc substrate 204. The annular intensity zone 206 acts to squeeze a diameter of the first beam, corresponding to the first trace 106 in Fig. 1. A diffraction-limited readout zone 208, which is not, or only little, illuminated by the annular intensity zone 206, is centrally located within the annular intensity zone 206. In an exemplary embodiment of the present invention, the first beam may be directed onto the readout zone 208 to read data stored on the coated optical disc substrate 204.

In an exemplary embodiment of the present invention, the surface of the coated optical disc substrate 204 that is struck by the second light beam in the annular intensity zone 206 changes. In particular, the refractive index or the reflectivity is temporarily changed in the annular intensity zone 206, but not in the readout zone 208. The change in reflectivity allows a pickup to read data in the readout zone 208 at very high resolutions. For example, the diameter of the readout zone 208 may be controlled to permit the reading of data having nanoscale resolution. Moreover, data may be read at a sub-diffraction limited resolution in accordance with an exemplary embodiment of the present invention. In an exemplary embodiment of the present invention, two dielectric layers 210, 211 may be used to optimize heat distribution.

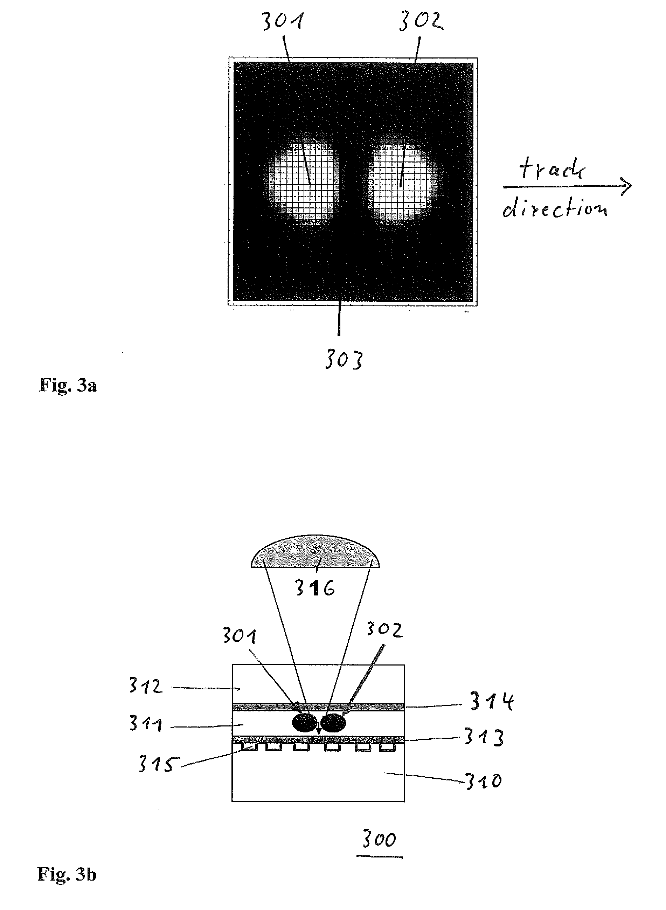

Another embodiment of the invention is explained now with regard to figures 3a and 3b, figure 3a showing an intensity distribution of beam 2 in the focal plane on the optical storage medium. The intensity distribution of beam 2 contains two intensity zones 301, 302 having each an annular shape and providing a centrally located diffraction limited read-out zone 303 between both intensity zones 301, 302, in correspondence with the intensity distribution 108 of figure 1. The annular intensity zones 301, 302 are oriented in a track direction of the optical storage medium, for providing a sub-diffraction limited resolution. The centrally located diffraction limited read-out zone 303 corresponds with a unidirectional valley squeezing the spot of the read-out beam 1 along the track direction.

In case of a storage medium comprising a super-resolution near field structure, comprising for example ZnO as the active material, the intensity zones 301, 302 on the optical storage medium provide a low reflectivity due to the high intensity beam 2, so that the read-out beam 1 is sensitive only to the read-out zone 303 between both annular intensity zones 301, 302. The read-out beam 1 is therefore sensitive to reflectivity changes originating from a pit/land or mark/space structure of a corresponding track of the optical storage medium in the read-out zone 303, including pits and lands or marks and spaces with sizes below the diffraction limit.

A storage medium 300 of this kind is shown in figure 3b, comprising a substrate layer 310, a layer with a super-resolution near field structure 311 and a protection layer 312. Between substrate layer 310 and layer 311 a first dielectric layer 313 is arranged and between layer 311 and cover layer 312 a second dielectric layer 314. The substrate layer 310 comprises a track with a pit/land data structure 315 corresponding with coded digital data. Figure 3b illustrates the storage medium 300 in a simplified cross section and is not to scale. The data structure of the storage medium may be included in another embodiment also in a data layer separated by one or several layers from the substrate.

An apparatus for reading data from the storage medium 300 comprises a pickup with a focal lens 316 for providing a first beam as the read-out beam and a second beam providing a centrally located diffraction limited read-out zone on the storage medium 310. The second beam projects two annular intensity zones 301, 302 on the storage medium 310, as explained with regard to figure 3a. First and second beams are both focused by means of focal lens 316.

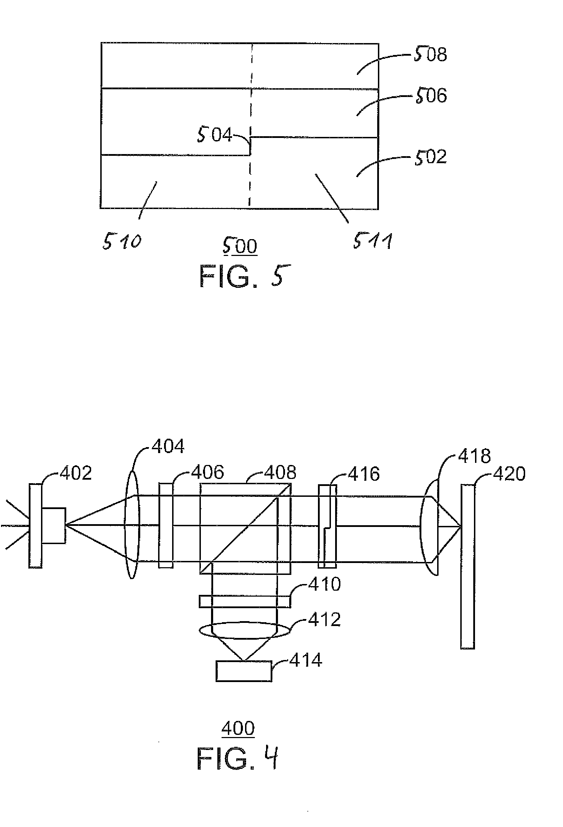

Fig. 4 is a block diagram showing a pickup that is adapted to read data from a storage medium in accordance with the embodiment of Figs. 3a, 3b. The pickup is generally referred to by the reference number 400. The pickup 400 comprises a laser diode 402, which delivers a laser beam to a collimator 404. The collimator 404 delivers the collimated beam to a half-wave plate 406, which is used to adjust the power between a linear polarization direction 1 beam and a linear polarization direction 2 beam. In an exemplary embodiment of the present invention, both beams are transmitted through a non-polarizing beam-splitter 408.and are delivered to a DOE 416. The DOE may be substantially the same as the DOE 500 shown in Fig. 5. In one exemplary embodiment of the present invention, the DOE 416 is adapted to produce a high power beam in the form of two circular intensity zones with a centrally located readout zone in accordance with Fig. 3a. In such an embodiment, improved resolution is achieved along one axis, along the track direction, rather than two axes. The annular intensity zone is focused by an objective lens 418 before being projected upon storage medium 420, in this embodiment an optical disc.

The light reflected by the storage medium 420 is directed to the non-polarizing beam-splitter 408 and part of it is delivered to a linear polarizer 410, which blocks the second beam, as reflected from storage medium 420, so that only the readout beam passes through an anamorphic focus lens 412 and reaches a detector 414. In an exemplary embodiment of the present invention, the detector 414 is adapted to receive the readout beam and to generate data and control signals based on reflected light of the readout beam. In one exemplary embodiment of the present invention, the readout beam is focused on a diffraction-limited spot centrally located within an annular intensity zone on an optical storage medium 420.

Fig. 5 is a diagram of a polarizing diffractive optical element DOE in accordance with an exemplary embodiment of the present invention. The DOE is generally referred to by the reference number 500. In an exemplary embodiment of the present invention, the DOE 500 adds a phase shift of π/2 of the transmitted beam with linear polarization direction 1. The perpendicular polarization direction 2 is not influenced by the DOE element. Therefore, polarization direction 1 forms beam 108, according to beams 301, 302 of Fig. 3a, and polarization direction 2 forms the read-out beam 106.

The DOE 500 may comprise a glass substrate 502. The glass substrate 502 includes a defined step 504, which has been etched therein. A liquid crystal layer 506 is disposed on the glass substrate 502 to make the DOE polarization sensitve. The height of the defined step 504 and the refractive index of the glass substrate 502 is determined in such a way that it imparts a phase shift of π/2 of the left part 510 with regard to the right part 511 for the transmitted beam with linear polarization direction 1 and no phase shift on the perpendicular polarization 2. The DOE 500 also includes a top layer 508.

It is in particular also possible to achieve confinement in two dimensions using a circular, donut shaped intensity distribution for beam 2. This can also be achieved with a single optical element, a special wave-plate. However in this case the separation of beam 1 and 2 using different polarization directions is no longer possible. Separation could be achieved by spatial filtering as beam 1 is a Hermite-Gaussian 00 mode and beam 2 a mixture of Hermite-Gaussian 10 and 01 modes.

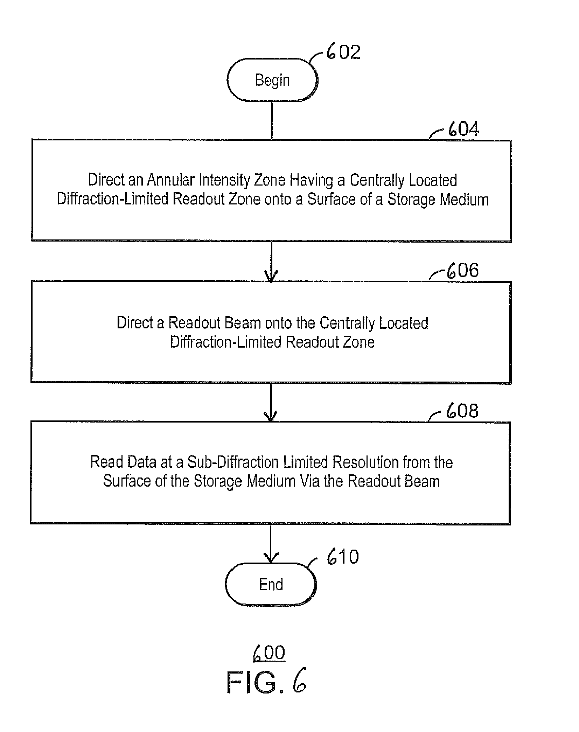

Fig. 6 is a process flow diagram showing a method of reading data from a storage medium having a surface in accordance with an exemplary embodiment of the present invention. The method is generally referred to by the reference number 600.

The method 600 begins at block 602. At block 604, an annular intensity zone 206 having a centrally located diffraction-limited readout zone 208 is directed onto the surface 204 of the storage medium, see Fig. 2. At block 606, a readout beam is directed onto the centrally located diffraction-limited readout zone. Finally, data is read at a sub-diffraction limited resolution from the surface 204 of the storage medium via the readout beam, as shown at block 608. At block 610, the method ends.

Exemplary embodiments of the present invention provide the ability to increase the resolution at which data is read from an optical medium along one or two axes. Exemplary embodiments of the present invention allow the use of a relatively simple optical pickup to read data. Moreover, an exemplary embodiment of the present invention allows data to be read at sub-diffraction limited resolutions from a diffraction-limited readout zone of an optical storage medium.

The skilled person will appreciate that combining any of the above-recited features of the present invention together may be desirable. Also other kinds of annular intensity zones may be used for squeezing the effective light spot of the readout beam. The invention therefore resides in the claims herein after appended.

## Claims

1. Method (500) of reading data from an optical storage medium having a substrate (204, 310) and a data structure (205, 315), the method (500) comprising the steps of:
- directing (502) at least one annular intensity zone (206, 301, 302) having a centrally located diffraction-limited readout zone (208, 303) onto the substrate (204, 310) of the storage medium;
- directing (504) a readout beam onto the centrally located diffraction-limited readout zone(208,303); and
- reading (506) data at a sub-diffraction limited resolution from the data structure (205, 315) via reflections caused by the readout beam.

2. Method (500) of reading data from a storage medium according to claim 1, wherein the readout beam is linear polarized and the polarization direction is perpendicular with regard to the polarization direction of at least two annular intensity zones (301, 302).

3. Method (500) of reading data from a storage medium according to claim 1 or 2, wherein the storage medium comprises a layer with a Super-Resolution Near-Field Structure (207, 311).

4. Method (500) of reading data from a storage medium according to claim 3, wherein a refractive index of the super-resolution near-field structure (207, 311) is changed within the at least one annular intensity zone (206, 301, 302) relative to an area of the super-resolution near-field structure (207, 311) outside the at least one annular intensity zone (206, 301, 302).

5. Method (500) of reading data from a storage medium according to any preceding claim, comprising the steps of performing tracking and performing focus control using light reflected from the centrally located diffraction-limited readout zone (208, 303).

6. Method (500) of reading data from a storage medium according to any preceding claim, using a light intensity within the at least one annular intensity zone (206, 301, 302) in the range of about 1 mW to 3 mW.

7. Method (500) of reading data from a storage medium according to any preceding claim, using a light intensity within the centrally located diffraction-limited readout zone (208, 303) in the range of about 0,1 mW to 0,5 mW.

8. Apparatus having a pickup (400) for reading data from a storage medium having a data structure (205, 315), the pickup (400) comprising:
- an element (416) that is adapted to direct at least one annular intensity zone (206, 301, 302) having a centrally located diffraction-limited readout zone (208) onto the surface (204) of the storage medium; and
- a detector (414) that is adapted to detect reflected light of the readout beam and to read data at a sub-diffraction limited resolution from the surface (204) of the storage medium.

9. Apparatus having a pickup (400) for reading data according to claim 9, wherein the storage medium comprises a Super-Resolution Near-Field Structure layer and a refractive index of the storage medium is changed within the at least one annular intensity zone (206, 301, 302) relative to an area of the storage medium outside the at least one annular intensity zone (206, 301, 302).

10. Apparatus having a pickup (400) for reading data according to claim 8 or 9, wherein a reflectivity of the storage medium is changed within the at least one annular intensity zone (206, 301, 302) relative to an area of the storage medium outside the at least one annular intensity zone (206, 301, 302).

11. Apparatus having a pickup (400) for reading data according to any of claims 9-12, wherein the detector (414) is adapted to perform tracking and focus control using light reflected from the centrally located diffraction-limited readout zone (208).

12. Apparatus having a pickup (400) for reading data according to any of claims 9-14, wherein a light intensity within the at least one annular intensity zone (206, 301, 302) is in the range of about 2 mW to 3 mW and a light intensity within the centrally located diffraction-limited readout zone (208) is about 300 µW.

13. Optical storage medium comprising a layer with a Super-Resolution Near-Field Structure (207, 311) for operation with an apparatus in accordance with one the claims 8-12.

14. Optical storage medium according to claim 13, wherein a refractive index of the super-resolution near-field structure (207, 311) is changed within the at least one annular intensity zone (206, 301, 302) relative to an area of the super-resolution near-field structure (207, 311) outside the at least one annular intensity zone (206, 301, 302).

15. Optical storage medium according to claim 14, wherein a material having a reduced reflectivity, when illuminated, for example ZnO, is included in the super-resolution near-field structure (207, 311).
